(19) Europäisches Patentamt
European Patent Office
Office européen des brevets

(11) **EP 4 206 844 A1**

(12) **EUROPEAN PATENT APPLICATION**

(43) Date of publication:
**05.07.2023   Bulletin 2023/27**

(21) Application number: **22216340.4**

(22) Date of filing: **23.12.2022**

(51) International Patent Classification (IPC):
***G05B 23/02*** *(2006.01)*

(52) Cooperative Patent Classification (CPC):
**G05B 23/0254; G05B 23/0283; G05B 2219/2637**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021   IT 202100032840**

(71) Applicant: **FPT Industrial S.p.A.**
**10156 Torino (IT)**

(72) Inventors:
• **DELLACASA, Andrea**
**10156 Torino (IT)**
• **RIZZO, Pierfrancesco**
**10156 Torino (IT)**

(74) Representative: **Fiume, Orazio**
**Praxi Intellectual Property S.p.A.**
**Corso Vittorio Emanuele II, 3**
**10125 Torino (IT)**

(54) **METHOD FOR PREDICTIVE FAILURE ANALYSIS OF A VEHICLE COMPONENT, IN PARTICULAR AN INDUSTRIAL OR COMMERCIAL VEHICLE**

(57)    Method for monitoring a state of health of a vehicle component or subsystem such as a particulate filter, an air filter, a sensor for measuring the NOx produced by a Diesel engine, etc., the method comprising (i) first acquisition of a variable measured target, representative of a state of health of the component or subsystem, (ii) second acquisition of a set of input variables interdependent with said target variable, (iii) calculation of an estimated target variable based on the second acquisition, (iv) comparison of said measured target variable with said estimated target variable and (v) calculation of an index representative of a state of health of the component or subsystem, function of said comparison, (vi) acquisition of said index and monitoring of its temporal variability and /o mileage of the vehicle, (vii) calculation of a residual life of the component or subsystem based on said monitoring.

Fig. 4

EP 4 206 844 A1

**Description**

**Field of the invention**

The present invention relates to the field of methods for the predictive analysis of failure of a vehicle component, in particular of industrial or commercial vehicles.

**State of the art**

The predictive diagnosis aims at identifying the behaviours at the subsystem and component level that can lead to a breakdown and the stop of the vehicle, in this context it is also proposed to estimate the residual useful life at the occurrence of the fault.

Techniques are known that are able to evaluate the state of health of machines and plants in operating conditions, to establish the possible need for maintenance intervention sufficiently in advance, thus making possible a predictive maintenance strategy.

Some techniques are based on the addition of appropriate sensors capable of detecting specific symptoms of degradation of a component under analysis.

Other techniques are based on the analysis of signals and data generally acquired for their control.

However, in complex systems the extremely high number of signals and components and the interactions between them make the predictive analysis of the degradation of subsystems extremely complex and the predictive analysis of the degradation of single components even more difficult. Among other things, the calculation capabilities on board the vehicle are limited and in order to be able to carry out heavy analyses from a computational point of view, it is necessary to transmit to the ground, i.e. to a central server, an enormous quantity of signals for their post-processing.

It is clear that the central server can be defined by a plurality of computers operationally connected to each other in order to distribute the workload.

Furthermore, if one considers that a centralized server is often responsible for monitoring tens of thousands of vehicles, it is understood that the problem is far from being simple.

The different subsystems are also very heterogeneous from each other, therefore, generally specific algorithms are developed for monitoring the health of this or that component with often incorrect results due to interactions with the other components defining the subsystem.

Unless specifically excluded in the detailed description that follows, what is described in this chapter is to be considered as an integral part of the detailed description.

**Summary of the invention**

The object of the present invention is to present a signal analysis method capable of guaranteeing excellent performance in terms of correct predictive diagnosis and at the same time a limited data flow between the vehicle and the central server.

The basic idea of the present invention is to propose a mixed solution, in the sense that it provides a pre-processing of the data on board the vehicle, so that the signals of the sensors and of the control unit are not sent to the central server but the signals of the health states of the various components according to aggregations, metrics and solutions based on a specific algorithm selected according to the characteristics of the observed target variable.

The central server is configured to process health states and estimate the remaining useful life of the component or subsystem via a comparison library. These results are then made available to the control room or are sent to the same vehicle.

The method, in its entirety, includes the following steps:

- Acquisition and processing of specific input signals and a target signal,
- Estimation of the target signal through the use of neural networks previously trained on the basis of the specific input signals previously processed,
- Comparison between estimated target signal and acquired target signal,
- Calculation of a health status of a component corresponding to the target signal,
- Estimate of a residual useful life of the component based on the evolution of the health status and multivariate statistical techniques.

The dependent claims describe preferred variants of the invention, forming an integral part of the present description.

## Brief description of the figures

Further objects and advantages of the present invention will become clear from the detailed description that follows of an embodiment of the same (and of its variants) and from the annexed drawings given for purely explanatory and non-limiting purposes, in which:

Fig. 1 shows a hardware diagram in which the method object of the present invention is implemented;
Fig. 2 shows in detail a portion of the diagram of figure 1;
Figs. 3a, 3b show three examples of neural networks implemented in the detailed scheme of figure 2;
Fig. 4 shows an example of a representative diagram of an evolution of an index representative of a state of health of a vehicular component or subsystem being investigated according to the present invention.

The same reference numbers and letters in the figures identify the same elements or components or functions.
It should also be noted that the terms "first", "second", "third", "superior", "inferior" and the like may be used herein to distinguish various elements. These terms do not imply a spatial, sequential, or hierarchical order for the modified items unless specifically indicated or inferred from the text.
The elements and characteristics illustrated in the various preferred embodiments, including the drawings, can be combined with each other without however departing from the scope of protection of the present application as described below.

## Detailed description

This algorithm exploits a subset of all the signals generally available to the vehicle control unit and in particular monitors a specific signal, called "target signal" while the other signals of the subset are used to estimate the same target signal and/or as enabling conditions of the calculation of the state of health. For example, a diagnosis is performed only when the engine temperature is within a predetermined temperature range. The acquired temperature value may or may not be used for the estimation of the target signal.
In the course of the present description, the term "signal" is confused with the variable of the physical quantity that the signal represents, either the analog or digital signal, either the variable of a fundamental or derived physical quantity.
The subset of the acquired signals is also called the "set of inputs" while the specific signal or parameter that is intended to be estimated through the set of inputs is called the "target" signal or variable.
The selection of the inputs is made taking into account aspects such as the interdependence of the physical variables and the effects of the environmental and operating conditions on the target variable corresponding to the target signal being investigated.
For example, for engine components whose behaviour is strongly influenced by ambient pressures and temperatures, these quantities are exploited to optimize the training of the algorithms and allow to distinguish anomalous conditions from normal conditions in certain operating envelopes.
Algorithms at the subsystem level and those at the component level of a subsystem differ in some cases by the target variable in others by the input subset.
In other words, the same target variable can be useful for understanding the state of health of a component or of a subsystem to which the component belongs by varying the input signals used to estimate the target variable.
For example, the target variable "boost pressure" is taken into consideration, monitoring among the input signals those relating to the engine operating conditions such as engine rotation speed, delivered torque, exhaust gas flow rate, etc.. With these signals of input it is possible to recognize any anomalies and losses of the fuel system. However, by adding further information such as the rotation speed of the turbocharger and the position of the actuator that moves the geometry of the turbocharger, it is possible to recognize failures of clogging of the air filter.
To identify anomalies at the component level, it is preferable to identify representative inputs of the single engine component also trying to use groups of different signals for different components, in order to be able to distinguish more easily between components which, more or less, are characterized by the same signals.

## MODELS

The different components are modelled through the implementation of properly trained neural networks with an appropriate pre-processing of the acquired data.
The general strategy is common to all the components and subsystems analysed in the present description, however, depending on the characteristics of the component or subsystem, it is preferable to use a specific data pre-processing and component modelling strategy as described below.

According to the present invention, the vehicle VIN is equipped with a processing unit PCM configured to calculate an index representative of a "Health status" of a vehicle component or subsystem.

The calculated index is sent to a server SDP on the ground, which monitors the index value over time and on the basis of "prediction libraries" calculates the residual life of the component or subsystem and shows the result of this calculation on a display, in a monitoring operations room or in the dashboard of the vehicle.

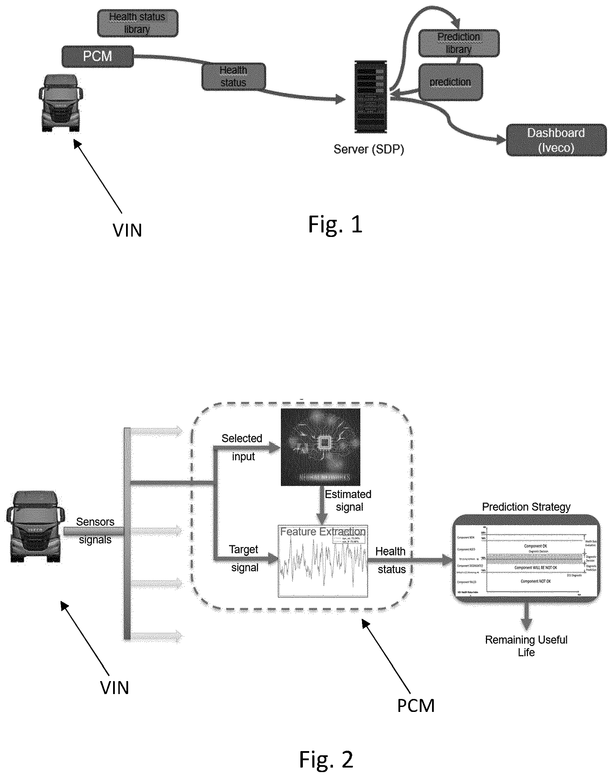

The processing unit PCM, in figure 2, shows a comparison operation between a measured target variable and one calculated by the neural network, in order to calculate the aforementioned index.

**Categorization of components and subsystems**

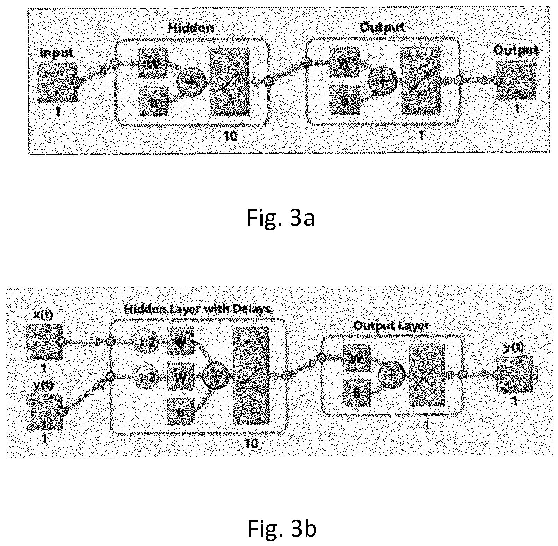

TYPE 1: it involves analysing a high frequency signal in an open loop. These models exploit the signals synchronized at the maximum available frequency, i.e. around 1 Hz, and do not present information on the target variable in the previous steps among the inputs, in other words, they do not contain signal integrators. These are signals relating to systems characterized by fast transients but with very long operating points and phases of roughly constant magnitude, e.g. DeNOx system pressure, catalyst efficiency. The neural network of figure 3a turns out to be the most suitable for components belonging to this typology.

TYPE 2: it involves analysing a medium-frequency sampled signal which may have more or less significant transients, i.e. less than 1 Hz and greater than 0.033 Hz, with regression. Two or more of the latest values, in terms of time, acquired of the target variable are considered, to estimate the current value on the basis of the evolution of the input quantities. In other words, the trends of the input variables and the history of the target variable itself are analysed to estimate its current value.

TYPE 3: it involves analysing a sampled signal at medium frequency in an open loop. This solution is suitable for models with very slow dynamics for which the aggregated inputs at low frequencies are more than sufficient to detect possible anomalies of the target variable, such as temperatures.

In other words, by virtue of the slowness of the dynamics, it is not necessary to carry out integrations of the signal and therefore, the neural network model of figure 3b turns out to be the most suitable one.

TYPE 4: it involves analysing a low-frequency sampled signal, detecting an error between the reference signal, commanded by the processing unit, and the measured signal, for example a position.

This comparison is made on long-term time windows and therefore the use of a neural network is not necessary, but rather multivariate statistical metrics are used. A typical monitoring that compares actuators or systems controlled in a closed loop by a controller over a long period. The monitoring window is very wide, for example of the order of 100-300 km covered by the vehicle. This type also has the advantage of filtering out any transients with anomalies that are specific to the component and which do not actually lead to operational problems and vehicle breakdowns.

Examples of components falling within the four types described above are given below:

TYPE 1:

- Air filter
- Turbocharger
- NOx downstream of the ATS
- AdBlue filter
- DeNOx pressure

TYPE2:

- DPF
- Rail duct pressure Rail_pressure
- Engineout exhaust gas temperature
- Boost pressure
- Intake manifold temperature

TYPE 3:

- NOx upstream of the ATS
- DOC
- injection system of the urea-based reducing agent in the ATS

TYPE 4:

- variable geometry of the eVGT turbocharger
- position of the throttle valve of the ATS Flap.

Signals pre-processing

In the case of medium frequency, all variables, both input and target, are averaged over a 30-60 second window. A less frequent evaluation of the target variable has the advantage of filtering out any noise from the sensors and the system, limiting the introduction of too stringent activation conditions.

In particular, a moving average function is used which interrupts the averaging process every time a key-off event occurs, restarting the signal acquisition and the relative average calculation at the next key-on event.

In general, in conditions of time jumps due to the interruption of one or more signals for a certain time interval, the averaging process is interrupted and then the averaging starts again from the first available value of the signal.

The same signals usually acquired at frequencies greater than 1 Hz are filtered and averaged before being made available to the library, in particular for quantities with slower dynamics the last available value is supplied, alternatively for faster dynamics we tend to calculate the average value during sub-sampling.

**Neural network training**

About the training of neural networks, it works for similar types of propulsion systems, for example the data collected for an engine equipped with EGR are not used, subsequently, to estimate an target variable of an engine not equipped with EGR.

Furthermore, during the training of the neural networks, all the data acquired from a vehicle affected by any anomaly are discarded, as an anomaly even on a subsystem different from the one being analysed, could induce correlations in the set of signals subject to acquisition aimed at training.

The database guarantees coverage of the most varied possible environmental and operating conditions, in order to describe the behaviour of a healthy vehicle subject to normal processes such as DPF regeneration and the variation of control strategies by the engine control unit.

Healthy behaviour, i.e. "healthy", is therefore defined by covering a database of various vehicles suitably filtered by implausible input quantities and targets, excluding vehicles affected by anomalies in other subsystems which may affect the input quantities of the model.

For example, an anomaly in the fuel injection system can affect the exhaust gas post-treatment system.

Therefore, upstream of the pre-processing, a selection of the signals is carried out excluding:

- Those from vehicles that have registered any error,
- Those from vehicles that have undergone any maintenance during the observation period;
- Those affected by low data quality and in particular low data dynamics and/or acquisition holes.

**Operation after training**

Preferably, the set of input variables selected for training is sent to a neural network previously trained with the same variables to generate an estimate of the target signal. The comparison of the target signal with the measured target signal makes it possible to calculate a parameter called "health status" characteristic of the component or subsystem in the conditions in which it is analysed.

Only the health status parameter is sent to the central server, which calculates the residual useful life of the relative component or subsystem and eventually proceeds to notify a human operator, be it an operator in a remote control room, or the driver himself of the vehicle.

**Example Type 1**

An implementation example of the present method applied to an air filter is now presented.

**Model variables**

The target variable of the model is the intake manifold pressure PCR_pActVal [hPa].

The other subsystem inputs are:

- Ambient pressure BaromPrs [hPa]
- Ambient temperature AmbAirTemp [°C]

- Measured position of the turbocharger turbine geometry ActPos_Vgt [%]
- Temperature at the intake manifold EngInAirTemp [°C]
- rotational speed of the turbocharger TrbCh_n [rpm]
- Vehicle speed VehSpeed [km/h]

The choice of the minimum number of signals to better describe the behaviour of the target variable can be done both by exploiting the automatisms and tests typical of the neural network training tools, known per se, and by exploiting physical considerations such as, for example:

- Ambient pressure and temperature make it possible to focus and know the conditions of the air sucked in and compressed by the turbocharger, representing the starting point for measuring the compression efficiency,
- the rotation speed of the turbo together with the position of the geometry of the turbine allow to estimate the mass of air that is pumped by the compressor and therefore the compression ratio that is given to the intake manifold,
- The intake manifold temperature allows the model to take into account the compressibility of the air and the proportionality between pressure and temperature,
- the vehicle speed shows the operation of the vehicle and the cutoff transients in which the engine operates in the engine running condition, i.e. while no fuel is injected, Additional inputs needed to evaluate and filter the input dataset are:
- Time [s]
- Odometer [km] (Ctv_ds_Odo)
- engine rotation speed epm_neng [rpm]
- Exhaust gas flow rate egtcond_dmeg [kg/h]
- Coolant temperature EngCoolTemp [°C]
- Intake manifold pressure PCR_pActVal [hPa].

**Data processing methodology**

All variables, both input and target variables, are averaged over 1 [s] which represents the maximum rate at which the vehicle telematics unit can perform signal sampling. This rate is necessary to properly study the pressure oscillations at the intake manifold and the relative control of this pressure by the electronic engine control unit.

Additional constraints are applied as conditions for enabling the health calculation:

- engine rotation speed higher than 500 [rpm]
- Exhaust gas flow rate between 150 and 2300 [kg/h]
- Ambient and intake manifold pressure higher than 900 [hPa]
- Ambient temperature between -10 and 50 [°C]
- Turbine geometry position greater than 0 %
- Coolant temperature higher than 70 [°C]
- The first available instant following engine power on is skipped.

**Training Dataset**

A training dataset was created for each type of engine i.e. one for the C9, C11 and C13, consisting of several vehicles identified as healthy and without DTCs and passed through the workshop between the selected period. In particular, the training variables are characterized by the following operating ranges for most of the training interval:

- 0< Exhaust gas flow rate <1800
- -10< Ambient and intake temperature <70
- 900< Ambient pressure <1050
- 0< Vehicle speed <100

**Example Type 2**

An implementation example of the present method applied to a particulate filter is now presented.

The target variable of the model is the differential pressure of the DPF [hPa] (Exh_pAdapPPFltDiff).

The model inputs are:

- Exhaust gas flow rate [kg/h] (egtcond_dmeg)

- Quantity of fuel injected [mg/hub] (InjCtl_qSetUnBal)
- DPF inlet temperature [°C] (Exh_tAdapTPFltUs)
- Engine revolutions [rpm] (epm_neng)
- Intake pressure [hPa] (PCR_pActVal)
- Vehicle speed [km/h] (VehSpeed)

To this set of signals is added the regression of the target signal (Exh_pAdapPPFltDiff), in other words the differential pressure value of the DPF measured at the previous instant of the calculation of this index is reported.

The choice of the minimum number of signals to better describe the behaviour of the target variable was made both by exploiting the automatisms and tests typical of the training tool and by exploiting physical considerations such as:

- The flow rate of the exhaust gases represents the mass of air that must pass through the filter therefore a direct proportionality between this and the differential pressure measurement is expected
- The quantity of fuel injected allows to highlight cutoff transients in which the engine operates in engine braking condition and no fuel is injected
- The DPF inlet temperature is essential to allow the model to take into account the compressibility of the fluid (air) and the proportionality between pressure and temperature
- The engine speed, the intake pressure and the speed highlight the functioning of the vehicle and make it possible to provide an advance on the dynamic variation of the exhaust gas flow rate

Additional inputs needed to evaluate and filter the dataset are:

- Time [s]
- Odometer Ctv_ds_Odo [km]

**Data processing methodology**

All variables, both input and target variables, are averaged over 30 seconds given that the dynamics of the component allow a less frequent assessment of the state of health, compared to type 1, with the advantage of filtering any noise from the sensors and the system

Additional constraints are applied as conditions for enabling the health calculation:

- Engine revolutions higher than 500 [rpm]
- Exhaust gas flow rate between 150 and 2300 [kg/h]
- Suction pressure higher than 900 [hPa]
- The first instant of evaluation at power on is skipped

**Training Dataset**

A training dataset is created for each type of engine, i.e. one for the C9, C11 and C13, consisting of several vehicles identified as healthy and without DTCs and passed through the workshop between the selected period. In particular, the training variables were characterized by the following operating ranges for most of the training interval:

- 0< Exhaust gas flow rate <1800
- 0< Quantity of fuel injected <300
- -10< DPF inlet temperature <730
- 500< Engine revolutions <1600
- 900< Intake pressure <3200
- 0< Vehicle speed <100

**Example Type 3**

An implementing example of the present method applied to a diesel cycle engine and in particular to the production of NOx is now presented.

**Model variables**

The target variable of the model is the NOx flow out of the exhaust manifold Ups_NOx_flow [g/h].

The model inputs are:

Quantity of fuel injected InjCtl_qSetUnBal [mg/hub]
Intake pressure PCR_pActVal [hPa]
Engine revolutions epm_neng [rpm]
Intake temperature EngInAirTemp [°C]
Exhaust gas flow rate egtcond_dmeg [kg/h] Coolant temperature EngCoolTemp [°C]

The target variable is calculated on the basis of the measurement of some auxiliary signals such as the Exh_rNOxPresCompNSCDs number of NOx upstream of the ATS system and the IndAH_r measurement of the air humidity sensor. The mathematical formula to define this mass flow rate is as follows:

$$Ups\_NOx\_flow =$$

$$(Humidity\_Correction.*Exh\_rNOxPresCompNSCDs).*EGTCond\_dmEG*$$

$$0.0015873;$$

Where,

- Humidity_Correction represents a correction factor based on the measurement of humidity and air temperature,
- Exh_rNOxPresCompNSCDs represents NOx measured at engine output in parts per million (PPM),
- EGTCond_dmEG represents the exhaust gas flow rate and
- 0.0015873 a constant.

The choice of the minimum number of signals to better describe the behavior of the target variable are made both by exploiting the automatisms and tests typical of the training tool and by exploiting physical considerations such as:

- The quantity of fuel injected allows to highlight both the cutoff transients in which, since the fuel is not injected, the NOx emitted decrease, and phenomena with high temperatures and high injected quantities which lead to a higher NOx emission due to non-optimal combustion,
- The exhaust gas flow rate allows the neural network to identify anomalies between the NOx flow and the global exhaust flow,
- Intake manifold pressure and temperature provide information on the correct introduction of air;
- engine rotation speed and coolant temperature help define the operating phase and cooling efficiency so that cold engine transients can be accounted for

Further useful inputs to evaluate and filter the data set are:

Time [s]
Odometer [km] (Ctv_ds_Odo)

**Data processing methodology**

All variables, both input and output, are averaged over 30 [s] given that the dynamics of the component allow a less frequent assessment of the state of health with the advantage of filtering any noise from the sensors and the system

Additional constraints are applied as conditions for enabling the health calculation:

- engine rotation speed higher than 500 [rpm]
- NOx measured by the sensor at the exhaust manifold, upstream of the ATS system between 100 [ppm] and 3000 [ppm]
- The first acquisitions after starting the engine are discarded.

The maximum NOx measurement helps to recognize the phase in which the sensor has not yet reached operating conditions and therefore any sensor measurement is rejected until operating conditions are reached.

On the other hand, the minimum NOx measurement is useful for discarding prolonged and unlikely cutoff conditions, i.e. engine power failure, in the absence of NOx emissions.

## Training Dataset

A training dataset is created for each type of engine, populated with data acquired from multiple vehicles identified as healthy and free of reports of any breakdown and maintenance interventions in the workshop during the acquisition period. In particular, the training variables were characterized by the following operating ranges for most of the training interval:

    0< Quantity of fuel injected <300
    0< Exhaust gas flow rate <1800
    900< Intake manifold pressure <3200
    -10< Intake manifold temperature <70
    500 < motor rotation speed <2100
    35< Coolant temperature <110

## Example Type 4

An implementing example of the present method applied to an eVGT variable geometry turbine is now presented.
The model inputs are:

- Measured position eVGT ActPos_Vgt [%]
- Commanded position eVGT DesPos_Vgt [%]

The following variables are used to monitor an evolution of an error between the commanded position and the position of the measured variable geometry.
Additional inputs needed to evaluate and discard the dataset are:

- Time [s]
- Odometer Ctv_ds_Odo [km]

## Data processing methodology

All the variables are acquired with a frequency of 1 Hz, cumulative and step-by-step averaged to then provide a result when a predetermined distance travelled by the vehicle is reached, such as 100 km for example. The dynamics of the component allows a less frequent assessment of the state of health with the advantage of filtering any noise due to sporadic anomaly events in the control.
No further enabling conditions are applied to data quality monitoring exceptions. For example, the analysis method takes into account:

- Interruption of the acquisition of odometer data and input variables; in this case the data deemed corrupted are not considered in the accumulation phase;
- Forward discontinuity of the data acquired by the odometer; this situation is addressed by stopping the evaluation and providing a result only if enough data has been accumulated,
- Backward discontinuity of the data acquired by the odometer; in this case a data packet is experienced which is not consistent with the progress of the vehicle and therefore the data is discarded or weighed with a lower weight.

## "Machine learning": Methodology, metrics and goodness of training

During the training phase, different types of neural networks were identified: some more suitable than others in reproducing the dynamics of some target parameters. In particular, in the development of the algorithms the following have been used:

    1) Feedforward networks = are made up of a series of layers. The first layer has a connection to the network input. Each next layer has a connection from the previous layer. The final layer produces the output of the neural network see figure 3a; these networks are defined as feedforward as they do not conserve state or memory, in the sense that the calculation of the estimated target variable is independent of the state of the input variables in the previous steps;
    2) Networks with open loop regression = This type of network represents a mix between the two previously seen since it is a feedforward network in which the regression of the target signal is supplied to the model as an exogenous input of the system, see figure 3b. In other words, it is a feedforward model which acquires as input the target variable measured in the previous instants. It is therefore a hybrid feedback, in that the estimated target variable is not feedback, but measured at the previous instants.

In all the cases listed above, several hidden layers of neurons were used (i.e. deep learning) with learning functions that update the weight values of the various neurons with different methods, for example for:

1) example type 1: DPF, the architecture is based on a multilayer Neural Network with 3 hidden layers characterized by a defined configuration of neurons (first layer = 30 neurons, second layer = 30 neurons, third layer = 40 neurons). The Matlab function fitnet from the Statistics and Machine Learning Toolbox is used for the feedforward neural network fitting, see figure 3b.

The learning function updates the weight and bias values according to the Powell-Beale conjugate gradient back-propagation method and performance is measured using the Mean-Squared error.

A maximum number of iterations of 3000 cycles and a minimum number of validation checks equal to 30 cycles have been included among the end-of-training conditions. 2) example type 2: NOx_Engineout. The architecture is based on a multilayer Neural Network, see figure 3a, with 3 hidden layers characterized by a defined configuration of neurons (first layer = 30 neurons, second layer = 30 neurons, third layer = 40 neurons). The Matlab function fitnet from the Statistics and Machine Learning Toolbox was used for neural network fitting.

The learning function updates the weight and bias values according to the Polak-Ribiére conjugate gradient back-propagation method and performance is measured using the Mean-Squared error.

A maximum number of iterations of 3000 cycles and a minimum number of validation checks of 30 have been included among the end-of-training conditions.

3) Example type 3: turbine. The architecture is based on a multilayer Neural Network with 3 hidden layers, see figure 3a, characterized by a defined configuration of neurons (first layer = 30 neurons, second layer = 30 neurons, third layer = 40 neurons). The Matlab function fitnet from the Statistics and Machine Learning Toolbox was used for neural network fitting.

The learning function updates the weight and bias values according to the Levenberg-Marquard conjugate gradient rollback back-propagation method, and performance is measured using the Mean-Squared error.

A maximum number of iterations of 3000 cycles and a minimum number of validation checks of 30 have been included among the end-of-training conditions.

The combination of neurons is common to most of the models developed because it allows a good reproduction of the target variable and the multi layer of neurons (deep learning) allows the identification of different dynamics and input combinations.

**Health Status and reliability**

After training the network, it is able to estimate the target variable representative of the health of a predetermined vehicular component or subsystem.

The transition from the modelled variable to the calculated state of health involves a series of operations aimed at:

- Define raw health status
- Filter the result
- Give weights to the health status values calculated in the previous steps and discriminate the critical conditions from the standard operating ones
- Generate an output clearly indicating the state of health of the component under investigation.

The definition of health status is based on the comparison between the measured and the estimated/modelled target variable.

The metrics underlying the comparison are mainly ratios, differences and standard deviations. The choice between one solution and the other is influenced by the operating range of the target quantity and by the importance of the deviation between the target and the model, for example the raw health status of:

- The turbine speed: it is monitored by means of the difference between the measured target value and the estimated target value; a differential comparison is preferred because anomalies at high rotation speed would not be appreciated in an important way,
- The pressure at the Rail supplying injectors, it is related to the pressure of the high pressure circuit of the rail with its estimated value; similarly, reports are used to estimate the state of DPF clogging and NOx production upstream of the ATS,

- Position of the throttle valve in the exhaust line, the normalized root mean square is used to monitor the deviation between the actual position and the position command signal, since it is an actuator position which oscillates in a fixed and physically limited range from the end of the run.

The raw results are then filtered for avid noise in the health status signal. Among the solutions implemented in the model of:

- urea level: the signal is filtered on the basis of the statistical distribution percentile, in particular the values with a distance from the mean value greater than twice the variance are identified as anomalous. Both mean value and variance were defined starting from training data and assuming a Gaussian distribution of health status,
- turbocharger: the state of health is related to a variable parameter defined through a map based on the rotation speed. In this way it is possible to calibrate the deviations and to give a different weight according to the operating conditions.

About the state of health of the engine in terms of NOx production upstream of the ATS, it is calculated by adding a constant value to the denominator and numerator, for example 100, in order to improve the approximation and evaluation of the Pearson coefficient.

Some models must be filtered on the basis of specific considerations that depend on the type of fault. For example, DPF clogging leads to very high target variable values compared to the respective calculated values, while in the case of leaks along the ATS, low target variable values are obtained compared to the corresponding calculated values.

About the NOx emissions generated by the engine and measured upstream of the ATS, it makes sense to calculate the index representative of the state of health of the engine, only on the phenomena for which there are measured emissions higher than those expected from the model.

As regards, for example, the state of clogging of the air filter, phenomena of measured boost pressure, lower than expected, are monitored. In fact, an occlusion of the filter leads to a reduction in the inflow of air entering the turbine with a consequent reduction in the boost pressure at the same engine rotation speed and the position of the variable geometry of the turbine.

Therefore, it makes sense to filter the state of health based on knowledge of the physics of the system and the type of failure to be predicted. This makes it possible to highlight characteristic engine operating modes and moments, which otherwise would end up being irrelevant in hours of use of the vehicle, such as transient anomalies, for example.

The filtered health is finally normalized to a range between 0 and 100 whose meaning is defined as

index = 100 means completely healthy component,
index = 0 means component completely failed.

A typical state of health can therefore be defined as:

$$Index = 100 - 100\left[1 - \left(0 < \left|\frac{\Delta_{mod}}{\Delta_{oss}}\right| < 1\right)\right]$$

Where Dmod means modelled quantity and Doss means observed (measured) target variable.

**Post-processing health status and prediction strategy**

The calculated states of health are then analysed and post-processed with the aid of various techniques including:

- Temporal and mileage filtering: health data is deemed less reliable and discarded under conditions of limited temporal and mileage use over the course of a day,
- Calculation of the index distribution on a daily and kilometric basis: from this distribution significant metrics are then used and extracted
- Use of classifiers to outline health conditions and anomalies and where possible also to isolate them.

**Example of calculation of the state of health of a DPF**

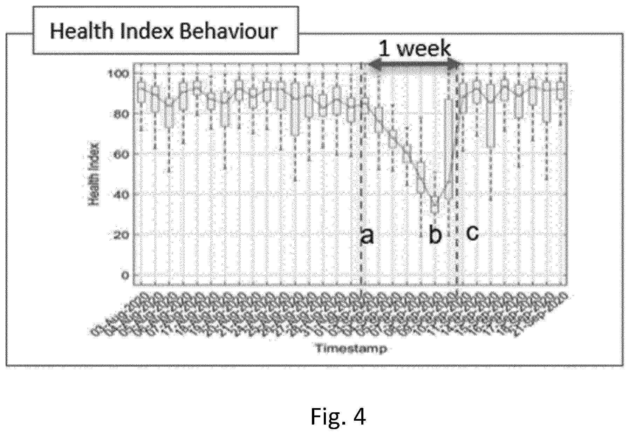

Figure 4 shows an example of one of the cases concerning the DPF system studied during the validation of the algorithms where the statistical distribution of the index is reported as a function of the date reported on the abscissa axis.

As summarized in the history of the vehicle, the index began to show in "a" an anomaly with respect to healthy operation, subsequently in "b" the engine control unit identified a DPF differential pressure measurement error and in "c" The vehicle went back to the workshop and replaced the DPF differential pressure sensor and the lines that hydraulically connect the sensor to the ATS.

After the repair, it can be seen that the index returns to a high state of health close to 100 in line with the positive intervention in the workshop.

The present invention can advantageously be implemented through a computer program comprising coding means for carrying out one or more steps of the method, when this program is executed on a computer. Therefore it is understood that the scope of protection extends to said computer program and also to computer-readable means comprising a recorded message, said computer-readable means comprising program coding means for carrying out one or more steps of the method, when said program is run on a computer.

Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

**Claims**

1.    Method for monitoring the health status of a vehicle component or subsystem such as a particulate filter, an air filter, a sensor for measuring NOx produced by a Diesel engine, etc., the method comprising

    - (i) first acquisition of a measured target variable, representative of a component or subsystem health status,
    - (ii) second acquisition of a set of input variables interdependent with said target variable,
    - (iii) calculation of a target variable estimated on the basis of the second acquisition,
    - (iv) comparison of said measured target variable with said estimated target variable and
    - (v) calculation of an index representative of the health status of the component or subsystem, as a function of this comparison,
    - (vi) acquisition of said index and monitoring of its temporal variability and/or vehicle mileage,
    - (vii) calculation of a residual life of the component or subsystem as a function of this monitoring.

2.    Method according to claim 1, wherein steps i - v are performed on board the vehicle and wherein steps vi and vii are performed by means of a central server (SDP) arranged in an acquisition and monitoring room.

3.    Method according to claim 1, wherein said (iii) calculation of the estimated target variable is performed by means of a neural network previously trained with data acquired from

    - an identical vehicle,
    - with healthy components and subsystems,
    - with each of the variables of the set of input variables, in a pre-ordered interval,
    - discarding discontinuities due to the interruption of signal acquisition.

4.    Method according to claim 3, wherein when the acquisition frequency of the measured target variable is at least 1 Hz and has substantially constant operating points interspersed with relatively fast transients, then a generation process of said estimated target variable is modelled by an open loop model.

5.    Method according to claim 3, wherein when the acquisition frequency of the measured target variable is between 0.03 Hz and 1 Hz and exhibits a slow dynamic, then a generation process of said estimated target variable is modelled by means of a ring model open or with regression.

6.    Method according to claim 3, wherein when an acquisition of the measured target variable is performed over a long time period or a distance travelled by the vehicle of at least 100 km, then a generation process of said estimated target variable is modelled, by means of a model for monitoring the differences between a control variable and a measured target variable.

7. Computer program comprising program coding means adapted to perform all steps (i - vii) of any one of claims 1 to 6, when said program is run on a computer.

8. Computer readable means comprising a recorded program, said computer readable means comprising program coding means adapted to perform all steps (i - vii) of any one of claims 1 to 6, when said program is run on a computer.

9. Processing unit (PCM) arranged to be installed on board the vehicle comprising a plurality of analog and/or digital interfaces for the acquisition of electrical signals of at least one vehicle sensor of a physical quantity, wherein the processing unit p configured to perform steps i - v of claim 1.

10. Technological infrastructure comprising a vehicle (VIN) wherein a processing unit (PCM) according to claim 9 is installed and a server (SDP) configured to acquire said index representative of a state of health of the component or subsystem of the vehicle, and configured to perform steps vi and vii of claim 1.

Fig. 1

Fig. 2

Fig. 3a

Fig. 3b

Fig. 4

Europäisches
Patentamt

European
Patent Office

Office européen
des brevets

# EUROPEAN SEARCH REPORT

Application Number

EP 22 21 6340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ES 2 773 728 A1 (RODRIGUEZ LOPEZ MIGUEL ANGEL [ES]) 14 July 2020 (2020-07-14) | 1-3,7-10 | INV. G05B23/02 |
| Y | * page 3, line 23 – page 5, line 20 * <br> * page 6, line 5 – page 7, line 27 * <br> * page 8, line 1 – page 11, line 7 * <br> * page 11, line 14 – page 12, line 14 * <br> * page 20, line 9 – page 21, line 19 * <br> * page 23, line 1 – page 25, line 30 * <br> * page 26, line 34 – page 28, line 13 * <br> * figures 1, 2 * <br> ----- | 4-6 | |
| Y | US 2016/187432 A1 (SAINT-MARCOUX ANTOINE [FR] ET AL) 30 June 2016 (2016-06-30) <br> * paragraph [0072] * <br> * figures 1, 2 * <br> ----- | 4 | |
| Y | US 2016/146895 A1 (YAZAMI RACHID [SG]) 26 May 2016 (2016-05-26) <br> * paragraph [0041] * <br> * paragraph [0051] * <br> * paragraph [0054] * <br> * paragraph [0069] – paragraph [0072] * <br> * paragraph [0077] – paragraph [0078] * <br> ----- | 5 | TECHNICAL FIELDS SEARCHED (IPC) <br><br> G05B <br> B60L <br> B60T |
| Y | US 2019/184957 A1 (YAO YIXIN [US] ET AL) 20 June 2019 (2019-06-20) <br> * paragraph [0027] * <br> * paragraph [0041] * <br> ----- | 6 | |

The present search report has been drawn up for all claims

| Place of search | Date of completion of the search | Examiner |
|---|---|---|
| Munich | 3 May 2023 | Hristov, Stefan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 21 6340

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| ES 2773728 | A1 | 14-07-2020 | ES | 2773728 A1 | 14-07-2020 |
| | | | WO | 2021105542 A1 | 03-06-2021 |
| US 2016187432 | A1 | 30-06-2016 | CN | 105556325 A | 04-05-2016 |
| | | | EP | 3028054 A1 | 08-06-2016 |
| | | | FR | 3009093 A1 | 30-01-2015 |
| | | | JP | 6473154 B2 | 20-02-2019 |
| | | | JP | 2016532866 A | 20-10-2016 |
| | | | KR | 20160039663 A | 11-04-2016 |
| | | | US | 2016187432 A1 | 30-06-2016 |
| | | | WO | 2015015083 A1 | 05-02-2015 |
| US 2016146895 | A1 | 26-05-2016 | NONE | | |
| US 2019184957 | A1 | 20-06-2019 | CN | 109927732 A | 25-06-2019 |
| | | | DE | 102018132306 A1 | 19-06-2019 |
| | | | US | 2019184957 A1 | 20-06-2019 |

EPO FORM P0459

For more details about this annex : see Official Journal of the European Patent Office, No. 12/82